# EUROPEAN PATENT APPLICATION

(11) **EP 1 803 956 A2**
(43) Date of publication of application: **04.07.2007**
(21) Application number: 06127249.8
(22) Date of filing: 27.12.2006
(51) Int. Cl.: F16D 3/84

(54) **Power transmission device**

(30) Priority: 28.12.2005 JP 2005379442
(71) Applicant: JTEKT CORPORATION, Chuo-ku Osaka-shi Osaka 542-8502 (JP)
(72) Inventor: Oe, Kenji, Osaka-shi Osaka 542-8502 (JP); Suzuki, Satoshi, Osaka-shi Osaka 542-8502 (JP); Furuta, Yuji, Nishikasugai-gun Aichi 452-8564 (JP); Tomatsu, Kikuko, Nishikasugai-gun Aichi 452-8564 (JP)
(74) Representative: TBK-Patent

(57) **Abstract**

A power transmission device is provided to improve sealing performance by reducing change in a surface pressure of sealing parts between power transmission shafts (1) and boots (4,5). A first cylinder part (41) of a boot is made from thermoplastic elastomer. A thickness Ta of the first cylinder part ranges from 1mm to 2mm, and a crimping allowance of the first cylinder part by a clamp member ranges from 0.1mm to 0.5mm. A width Wa of a first engaging groove (12) formed at a power transmission shaft is equal to or greater than 20 percents of an axial width Wb of the clamp member. An axial distance from an end of the clamp member (6,8), near a bellows part, to an edge portion of the first engaging groove, near the bellows part, is in the range between 42.5 percents to 100 percents of the axial width Wb of the clamp member.

## Description

### Field of the Invention

The present invention relates to a power transmission device which is provided with boots, wherein the boots cover connecting portions of plural power transmission shafts.

### BACKGROUND OF THE INVENTION

For example, a power transmission device for a vehicle comprises an input shaft which receives power from an engine or the like, an intermediate shaft which is connected to the input shaft by a constant velocity joint, and an output shaft which is connected to the intermediate shaft by a constant velocity joint. A connecting portion between the input shaft and the intermediate shaft and a connecting portion between the intermediate shaft and the output shaft are covered by bellows-shaped boots, in order to encapsulate lubricant or the like therein (See Japanese Unexamined Patent Publication (KOKAI) No. 2001-315539 and Japanese Unexamined Patent Publication (KOKAI) No. 2005-106294, for instance).

In order to fix the boot to the intermediate shaft, the intermediate shaft is formed with an engaging groove around an outer peripheral surface thereof, and the boot is formed with a protrusion around an inner peripheral surface thereof which is engaged to the engaging groove of the intermediate shaft. Further, a clamp member pressurizes the boot toward the intermediate shaft from an outer peripheral side of the boot. Accordingly, relative positions of the intermediate shaft and the boot are decided, and seal therebetween is secured.

The improvement of the sealing performance between the power transmission shaft, e.g., the intermediate shaft, and the boot has been required more and more. Specifically, when an axis of a shaft provided with the boot is slanted, a bellows part of the boot is bent. As the bellows part is bent and the bellows part is not bent, a surface pressure of a sealing part between the power transmission shaft and the boot changes. When the surface pressure of the sealing part is changed to be decreased, the sealing performance may also be decreased. In order to solve this problem, it may be considered that the surface pressure of the sealing part is preset to be high, so that the lowest surface pressure of the sealing part is more than a predetermined value although the surface pressure of the sealing part is changed. However, if the surface pressure of the sealing part is preset to be excessively high, there may be a problem that durability of the boot is decreased.

### SUMMARY OF THE INVENTION

Therefore, the present invention has been made in view of the above problems, and it is an object of the present invention to provide a power transmission device capable of further improving sealing performance by reducing change of a surface pressure of a sealing part between a power transmission shaft and a boot.

The inventors of the present invention have studied to solve the above problems, and discovered by trial and error that edge portions of both sides of an engaging groove formed at a power transmission shaft have the most effect on sealing performance. And, the inventors discovered that the sealing performance is changed according to a position relationship between an engaging groove and a clamp member, and accomplished the present invention.

A power transmission device according to the present invention comprises a first power transmission shaft which is formed with a first engaging groove around an outer peripheral surface in a peripheral direction, a second power transmission shaft which is swingably connected to the first power transmission shaft, a boot which comprises a first cylinder part, a second cylinder part and a bellows part, and a first clamp member which clamps an outer peripheral surface of the first cylinder part and pressurizes the first cylinder part toward the first power transmission shaft.

The first cylinder part of the boot is a cylindrical-shaped part which is disposed at an outer periphery of the first power transmission shaft. The first cylinder part has a first protrusion which is formed around an inner peripheral surface in a peripheral direction and engaged to the first engaging groove in an axial direction. The second cylinder part of the boot is a cylindrical-shaped part which is disposed at an outer periphery of the second power transmission shaft. The bellows part of the boot is a bellows-shaped part which integrally connects the first cylinder part and the second cylinder part.

The first cylinder part is made from thermoplastic elastomer, a thickness of the first cylinder part is in the range of 1mm to 2mm, and a crimping allowance of the first cylinder part by the first clamp member is in the range of 0.1mm to 0.5mm. Here, the thermoplastic elastomer includes thermoplastic resin, thermoplastic rubber or the like. The thickness of the first cylinder part is a thickness of the part where the first protrusion is not formed. That is, the thickness of the first cylinder part corresponds to a thickness of the first cylinder part from which the first protrusion is excluded. Also, the crimping allowance of the first cylinder part by the first clamp member is a difference between the thickness of the first cylinder part before clamping the first cylinder part by the first clamp member and the thickness of the first cylinder part after clamping the first cylinder part by the first clamp member.

Assuming that an axial width of the first clamp member is 100 percents, a width of the first engaging groove is equal to or greater than 20 percents thereof. An axial distance from an end of the first clamp member, near a bellows part, to an edge portion of the first engaging groove, near the bellows part, is in the range between 42.5 percents to 100 percents of the axial width of the first clamp member.

The edge portion of the first engaging groove is an outermost peripheral portion of the first engaging groove, i.e., a boundary portion between the first engaging groove and the outer peripheral surface of the first power transmission shaft. The edge portion of the first engaging groove is provided at two positions, near the bellows part and opposite to the bellows part. In other words, the edge portion of the first engaging groove, near the bellows part, means the boundary portion closer to the bellows part of boundary portions between the first engaging groove and the outer peripheral surface of the first power transmission shaft. And, the width of the first engaging groove is an axial distance from the edge portion of the first engaging groove, near the bellows part, to the other edge portion, opposite to the bellows part.

Meanwhile, in the conventional power transmission device, the first engaging groove is generally disposed at an approximate center of the axial width of the first clamp member. In this case, assuming that the axial width of the first clamp member is 100 percents and the width of the first engaging groove is about from 20 percents to 40 percents of the axial width of the first clamp member, the axial distance from the end of the first clamp member, near the bellows part, to the edge portion of the first engaging groove, near the bellows part, ranges between 30 percents to 40 percents of the axial width of the first clamp member.

However, according to the power transmission device of the present invention described as above, if the axial width of the first clamp member is 100 percents, the axial distance from the end of the first clamp member, near the bellows part, to the edge portion of the first engaging groove, near the bellows part, is equal to or greater than approximately 42.5 percents, and the width of the first engaging groove is equal to or greater than 20 percents. Thus, the first engaging groove is disposed at a position farther from the bellows part than a center of the axial width of the first clamp member. The edge portion near the bellows part of the edge portions of the first engaging groove having sealing performance is disposed at a position far away from the bellows part, in comparison with the conventional device.

Assuming that the axial width of the first clamp member is 100 percents, an upper limit value of the axial distance from the end of the first clamp member, near the bellows part, to the edge portion of the first engaging groove, near the bellows part, is equal to or less than the axial width thereof (100 percents). Therefore, the edge portion of the first engaging groove, near the bellows part, is necessarily positioned within the range of the axial width of the first clamp member.

As described above, because the edge portion of the first engaging groove, near the bellows part, is disposed at a position far away from the bellows part and positioned within the range of the axial width of the first clamp member, change of a surface pressure of the edge portion can be reduced as the bellows part is not bent and the bellows part is bent. Even when the bellows part is bent, the surface pressure of the sealing part of the first power transmission shaft and the first cylinder part of the boot can be prevented from being decreased. Therefore, regardless of the state of the bellows part, the sealing performance of the first power transmission shaft and the first cylinder part of the boot can be stabilized and improved. Also, it is unnecessary to increase the surface pressure of the sealing part in advance, whereby durability of the boot can be increased.

In the above description of the power transmission device according to the present invention, the position relationship determined between the end of the first clamp member, near the bellows part, and the edge portion of the first engaging groove, near the bellows part, has been explained. In addition, it is more preferable that the position relationship between an end of the first clamp member, opposite to the bellows part, and an edge portion of the first engaging groove, opposite to the bellows part, is determined as follows.

The edge portion of the first engaging groove, opposite to the bellows part, may be disposed at a position closer to the bellows part than the end of the first clamp member, opposite to the bellows part. Thus, the edge portion of the first engaging groove, opposite to the bellows part, is necessarily positioned within the range of the axial width of the first clamp member. Therefore, the sealing performance of the edge portion of the first engaging groove, opposite to the bellows part, can be securely achieved.

Also, in the power transmission device according to the present invention, it is preferable that a protruding height of the first protrusion of the first cylinder part is smaller than a depth of the first engaging groove. In this case, when the first cylinder part is pressurized to the first power transmission shaft by the clamp member, the inner peripheral surface of the first cylinder part, where the first protrusion is not formed, comes into contact with the outer peripheral surface of the first power transmission shaft. And, when the first cylinder part is pressurized to the first power transmission shaft by the clamp member, an inner peripheral end of the first protrusion of the first cylinder part does not contact a bottom of the first engaging groove. If the relationship between the protruding height of the first protrusion and the depth of the first engaging groove is configured by the above-described relationship, the sealing performance can be securely stabilized and improved. The protruding height of the first protrusion is a radial distance from the inner peripheral surface of the first cylinder part, where the first protrusion is not formed, to the inner peripheral end of the first protrusion.

In the above description of the power transmission device according to the present invention, the position relationship determined between the first engaging groove formed at the first power transmission shaft and the first clamp member clamping the first cylinder part has been explained. It is more effective to determine a position relationship between a second engaging groove formed at the second power transmission shaft and a second clamp member clamping the second cylinder part. In addition to the above-described constitution of the power transmission device according to the present invention, the second power transmission shaft is formed with a second engaging groove around an outer peripheral surface in a peripheral direction, the second cylinder part has a second protrusion which is formed around an inner peripheral surface in a peripheral direction and engaged to the second engaging groove in an axial direction, and the power transmission device further comprises a second clamp member which clamps an outer peripheral surface of the second cylinder part and pressurizes the second cylinder part toward the second power transmission shaft. The second cylinder part is made from thermoplastic elastomer, a thickness of the second cylinder part is in the range of 1mm to 2mm, and a crimping allowance of the second cylinder part by the second clamp member is in the range of 0.1mm to 0.5mm. The thickness of the second cylinder part is a thickness of the part where the second protrusion is not formed. That is, the thickness of the second cylinder part corresponds to a thickness of the second cylinder part from which the second protrusion is excluded. Also, the crimping allowance of the second cylinder part by the second clamp member is a difference between the thickness of the second cylinder part before clamping the second cylinder part by the second clamp member and the thickness of the second cylinder part after clamping the second cylinder part by the second clamp member.

Assuming that an axial width of the second clamp member is 100 percents, a width of the second engaging groove is equal to or greater than 20 percents thereof. Further, assuming that the axial width of the second clamp member is 100 percents, an axial distance from an end of the second clamp member, near the bellows part, to an edge portion of the second engaging groove, near the bellows part, is in the range of 42.5 percents to 100 percents.

The edge portion of the second engaging groove is an outermost peripheral portion of the second engaging groove, i.e., a boundary portion between the second engaging groove and the outer peripheral surface of the second power transmission shaft. The edge portion of the second engaging groove is provided at two positions, near the bellows part and opposite to the bellows part. In other words, the edge portion of the second engaging groove, near the bellows part, means the boundary portion closer to the bellows part of boundary portions between the second engaging groove and the outer peripheral surface of the second power transmission shaft. And, the width of the second engaging groove is an axial distance from the edge portion of the second engaging groove, near the bellows part, to the other edge portion, opposite to the bellows part.

As described above, because the edge portion of the second engaging groove, near the bellows part, is disposed at a position far away from the bellows part and positioned within the range of the axial width of the second clamp member, when the bellows part is not bent and when the bellows part is bent, change of the surface pressure of the edge portion can be reduced. Even when the bellows part is bent, the surface pressure of the sealing part of the second power transmission shaft and the second cylinder part of the boot can be prevented from being decreased. Thus, regardless of the state of the bellows part, the sealing performance of the second power transmission shaft and the second cylinder part of the boot can be stabilized and improved. Also, it is unnecessary to increase the surface pressure of the sealing part in advance, whereby durability of the boot can be increased.

In the above description of the power transmission device according to the present invention, the position relationship determined between the end of the second clamp member, near the bellows part, and the edge portion of the second engaging groove, near the bellows part, has been explained. In addition, it is more preferable that the position relationship between an end of the second clamp member, opposite to the bellows part, and an edge portion of the second engaging groove, opposite to the bellows part, is determined as follows.

The edge portion of the second engaging groove, opposite to the bellows part, may be disposed at a position closer to the bellows part than the end of the second clamp member, opposite to the bellows part. Therefore, the edge portion of the second engaging groove, opposite to the bellows part, is necessarily positioned within the range of the axial width of the second clamp member. Thus, the sealing performance of the edge portion of the second engaging groove, opposite to the bellows part, can be securely achieved.

Also, in the power transmission device according to the present invention, it is preferable that a protruding height of the second protrusion of the second cylinder part is smaller than a depth of the second engaging groove. In this case, when the second cylinder part is pressurized to the second power transmission shaft by the clamp member, the inner peripheral surface of the second cylinder part, where the second protrusion is not formed, comes into contact with the outer peripheral surface of the second power transmission.shaft. And, when the second cylinder part is pressurized to the second power transmission shaft by the clamp member, an inner peripheral end of the second protrusion of the second cylinder part does not contact a bottom of the second engaging groove. If the relationship between the protruding height of the second protrusion and the depth of the second engaging groove is configured by the above-described relationship, the sealing performance can be securely stabilized and improved. The protruding height of the second protrusion is a radial distance from the inner peripheral surface of the second cylinder part, where the second protrusion is not formed, to the inner peripheral end of the second protrusion.

According to the power transmission device of the present invention, when the bellows part is not bent and when the bellows part is bent, the change of the surface pressure of the sealing part between the first power transmission shaft and the boot, and further, the change of the surface pressure of the sealing part between the second power transmission shaft and the boot can be reduced. In other words, regardless of the state of the bellows part, the sealing performance can be stabilized and improved.

### BRIEF DESCRIPTION OF THE DRAWINGS

The above and other objects and features of the present invention will become apparent from the following description of preferred embodiment, given in conjunction with the accompanying drawings, in which:

Fig. 1 is an axial sectional view partially illustrating a drive shaft for a vehicle.

Fig. 2 is an enlarged view of an "A" part in FIG. 1.

Fig. 3 shows an analysis result of a surface pressure change ratio of a sealing part as a distance L is changed.

### DETAILED DESCRIPTION OF THE PREFERRED EMBODIMENTS

Now, preferred embodiments of the present invention will be described in detail with reference to the annexed drawings.

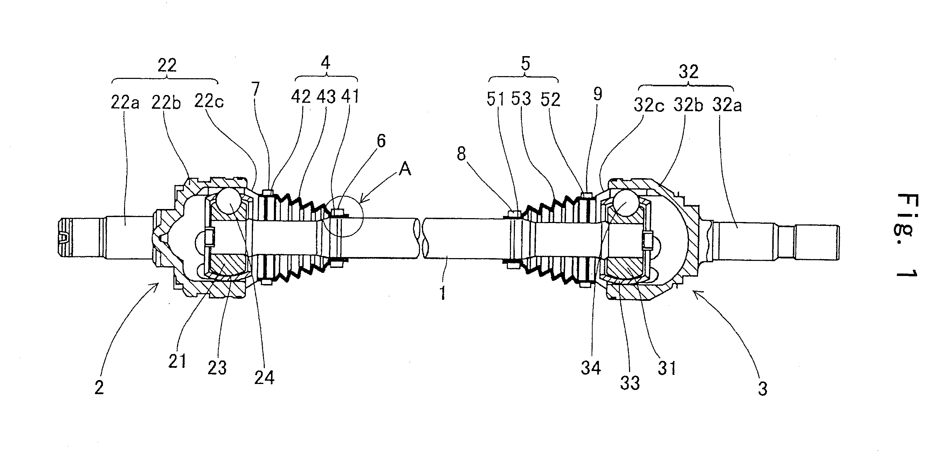

(1) Constitution of Drive Shaft for Vehicle
As an example of a power transmission device in accordance with the present invention, a drive shaft for a vehicle will be described. The drive shaft for the vehicle will be described with reference to Fig. 1. Fig. 1 is a sectional view partially illustrating the drive shaft for the vehicle in an axial direction. As shown in Fig. 1, the drive shaft for the vehicle comprises an intermediate shaft 1, an inboard joint 2, an outboard joint 3, an inboard boot 4, an outboard boot 5, a small-diameter inboard clamp member 6, a large-diameter inboard clamp member 7, a small-diameter outboard clamp member 8, and a large-diameter outboard clamp member 9. The inboard joint 2 and the outboard joint 3 are the same elements as those which are disclosed in Japanese Patent Laid-open Publication No. 3-223524, for example.

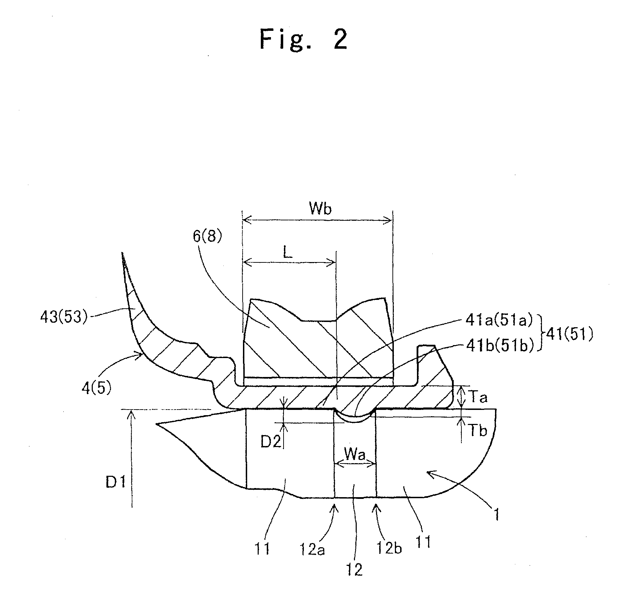

The intermediate shaft 1 (a first power transmission shaft in the present invention) is a power transmission shaft which has a hollow cylindrical shape. In other words, the intermediate shaft 1 transmits power inputted from a driving shaft side of the inboard joint 2 to a driven shaft side of the outboard joint 3. First engaging grooves 12 (see Fig. 2 which shows an "A" part in FIG. 1) are formed at two positions around an outer peripheral surface of the intermediate shaft 1. The first engaging grooves 12 are engaged to first protrusions 41b and 51b of first cylinder parts 41 and 51 of the boots 4 and 5, which will be described later, in an axial direction. If seen from an axial sectional direction, the first engaging grooves 12 have a concave shape, and are formed over the peripheral surface in a peripheral direction. The detailed description of the first engaging grooves 12 will be made later.

The inboard joint 2 and the outboard joint 3 are both a constant velocity joint which is embodied by a fixed ball joint. As shown in Fig. 1, the inboard joint 2 is connected to a power input side of the intermediate shaft 1 (a left side in Fig. 1) . The outboard joint 3 is connected to a power output side of the intermediate shaft 1 (a right side in Fig. 1). The inboard joint 2 comprises a ball type inner member 21, a ball type outer member 22, a cage 23, and a ball 24. The outboard joint 3 comprises a ball type inner member 31, a ball type outer member 32, a cage 33, and a ball 34.

The ball type inner members 21 and 31 have a cylindrical shape. If seen from an axial sectional direction, outermost peripheral surfaces of the ball type inner members 21 and 31 are formed in a uniform circular arc shape, i.e., a partial spherical surface shape. Also, if seen from a radial sectional direction, six inner-side ball grooves which are formed in a circular arc concave shape are equidistantly formed at the outer peripheral surfaces of the ball type inner members 21 and 31, in parallel with each other in the axial direction. Serrations are formed around inner peripheral surfaces of the ball type inner members 21 and 31. Serrations formed at the intermediate shaft 1 are fittedly engaged with the serrations of the ball type inner members 21 and 31. In other words, the ball type inner members 21 and 31 are integrally connected to the intermediate shaft 1.

The ball type outer members 22 and 32 (second power transmission shafts in the present invention) comprise shaft parts 22a and 32a, cylinder parts 22b and 32b, and cylindrical boot-fixing members 22c and 32c. Each of the cylinder parts 22b and 32b is formed in the shape of one-end closed cylinder on the bottom portion to which an edge portion of each of the shaft parts 22a and 32a is integrally formed. The cylindrical boot-fixing members 22c and 32c are fixed to open portions of the cylinder parts 22b and 32b, respectively. A left end of the shaft part 22a of the ball type outer member 22 in Fig. 1 is connected to a transmission (not shown). A right end of the shaft part 32a of the ball type outer member 32 in Fig. 1 is connected to a differential gear (not shown). If seen from the axial sectional direction, innermost peripheral surfaces of the cylinder parts 22b and 32b are formed in a uniform circular arc shape, i.e., a partial spherical surface shape. Also, if seen from the radial sectional direction, six outer-side ball grooves which are formed in a circular arc concave shape are equidistantly formed at the inner peripheral surfaces of the cylinder parts 22b and 32b, in parallel with each other in the axial direction. Second engaging grooves (not shown) are formed at an outer peripheral surface of a right portion of the boot-fixing member 22c in Fig. 1. Also, the second engaging grooves (not shown) are formed at an outer peripheral surface of a left portion of the boot-fixing member 32c in Fig. 1. The second engaging grooves are engaged to second protrusions (not shown) of second cylinder parts 42 and 52 of the boots 4 and 5, which will be described later, in the axial direction. If seen from the axial sectional direction, the second engaging grooves have a concave shape, and are formed over the peripheral surface in the peripheral direction.

The cages 23 and 33 are formed in a nearly cylindrical shape, and disposed between the ball type inner members 21 and 31 and the cylinder parts 22b and 32b of the ball type outer members 22 and 32. Inner peripheral surfaces of the cages 23 and 33 are formed in a spherical surface shape corresponding to the outermost peripheral surfaces of the ball type inner members 21 and 31. Also, outer peripheral surfaces of the cages 23 and 33 are formed in a spherical surface shape corresponding to the innermost peripheral surfaces of the cylinder parts 22b and 32b of the ball type outer members 22 and 32. In other words, the cages 23 and 33 can rotate relatively to the ball type inner members 21 and 31 and the ball type outer members 22 and 32 without contacting the inner and outer members. The cages 23 and 33 are formed with six rectangle-shaped holes which are equidistantly arranged.

The balls 24 and 34 are rollably disposed in the inner-side ball grooves of the ball type inner members 21 and 31 and the outer-side ball grooves of the cylinder parts 22b and 32b of the ball type outer members 22 and 32 in the peripheral direction. Also, the balls 24 and 34 are inserted through the rectangle-shaped holes of the cages 23 and 33. Therefore, by the balls 24 and 34, the rotation of the ball type inner member 21 is transmitted to the ball type outer member 22, and the rotation of the ball type outer member 32 is transmitted to the ball type inner member 31.

The inboard boot 4 is made from thermoplastic elastomer, and formed in a bellows shape. The inboard boot 4 comprises a first cylinder part 41 which is positioned at a right end in Fig. 1, a second cylinder part 42 which is positioned at a left end in Fig. 1, and a bellows part 43 which integrally connects the first cylinder part 41 and the second cylinder part 42. An inner diameter of the first cylinder part 41 of the inboard boot 4 is almost equal to an outer diameter near the first engaging groove 12 of the intermediate shaft 1. The first cylinder part 41 is formed with a first protrusion 41b (see Fig. 2) over an inner peripheral surface in the peripheral direction. The first protrusion 41b is engaged to the first engaging groove 12 (see Fig. 2) of the intermediate shaft 1 in the axial direction. And, an inner diameter of the second cylinder part 42 of the inboard boot 4 is almost equal to an outer diameter of a right end in Fig. 1 of the boot-fixing member 22c of the ball type outer member 22 of the inboard joint 2. That is, the inner diameter of the first cylinder part 41 is smaller than the inner diameter of the second cylinder part 42. Since the bellows part 43 is formed in a bellows shape, the bellows part 43 can be freely bent. The detailed shape of the first cylinder part 41 of the inboard boot 4 will be described later.

The outboard boot 5 is made from thermoplastic elastomer, and formed in a bellows shape. The outboard boot 5 comprises a first cylinder part 51 which is positioned at a left end in Fig. 1, a second cylinder part 52 which is positioned at a right end in Fig. 1, and a bellows part 53 which integrally connects the first cylinder part 51 and the second cylinder part 52. An inner diameter of the first cylinder part 51 of the outboard boot 5 is almost equal to an outer diameter near the first engaging groove 12 of the intermediate shaft 1. The first cylinder part 51 is formed with a first protrusion 51b over an inner peripheral surface in the peripheral direction. The first protrusion 51b is engaged to the first engaging groove 12 of the intermediate shaft 1 in the axial direction. And, an inner diameter of the second cylinder part 52 of the outboard boot 5 is almost equal to an outer diameter of the boot-fixing member 32c of the ball type outer member 32 of the outboard joint 3. That is, the inner diameter of the first cylinder part 51 is smaller than the inner diameter of the second cylinder part 52. Since the bellows part 53 is formed in a bellows shape, the bellows part 53 can be freely bent. The detailed shape of the first cylinder part 51 of the outboard boot 5 is same as the detailed shape of the first cylinder part 41 of the inboard boot 4 which will be described later.

As described above, the inboard boot 4 and the outboard boot 5 cover the inside of the inboard joint 2 and the outboard joint 3. Therefore, by the inboard boot 4 and the outboard boot 5, the lubricant enclosed in the inboard joint 2 and the outboard joint 3 is prevented from being leaked outside, and external dust can not enter the inboard joint 2 and the outboard joint 3.

The small-diameter inboard clamp member 6 serves to clamp the first cylinder part 41 of the inboard boot 4 to the intermediate shaft 1. The small-diameter inboard clamp member 6 is disposed at an outer periphery of the first cylinder part 41 of the inboard boot 4, in alignment with an axial position of the first engaging groove 12 of the intermediate shaft 1, and pressurizes the first cylinder part 41 of the inboard boot 4 toward the intermediate shaft 1. The large-diameter inboard clamp member 7 serves to clamp the second cylinder part 42 of the inboard boot 4 to the ball type outer member 22 of the inboard joint 2. The large-diameter inboard clamp member 7 is disposed at an outer periphery of the second cylinder part 42 of the inboard boot 4, in alignment with an axial position of the second engaging groove of the boot-fixing member 22c of the ball type outer member 22 of the inboard joint 2, and pressurizes the second cylinder part 42 of the inboard boot 4 toward the boot-fixing member 22c of the ball type outer member 22.

The small-diameter outboard clamp member 8 serves to clamp the first cylinder part 51 of the outboard boot 5 to the intermediate shaft 1. The small-diameter outboard clamp member 8 is disposed at an outer periphery of the first cylinder part 51 of the outboard boot 5, in alignment with an axial position of the first engaging groove 12 of the intermediate shaft 1, and pressurizes the first cylinder part 51 of the outboard boot 5 toward the intermediate shaft 1. The large-diameter outboard clamp member 9 serves to clamp the second cylinder part 52 of the outboard boot 5 to the ball type outer member 32 of the outboard joint 3. The large-diameter outboard clamp member 9 is disposed at an outer periphery of the second cylinder part 52 of the outboard boot 5, in alignment with an axial position of the second engaging groove of the boot-fixing member 32c of the ball type outer member 32 of the outboard joint 3, and pressurizes the second cylinder part 52 of the outboard boot 5 toward the boot-fixing member 32c of the ball type outer member 32.

(2) Detailed Constitution of "A" part in Fig. 1. The detailed constitution of an "A" part in Fig. 1 will be described with reference to Fig. 2. Fig. 2 is an enlarged view of the "A" part in FIG. 1.

First, the detailed constitution of the "A" part in Fig. 1 of the intermediate shaft 1 will be described. An outer diameter of the intermediate shaft 1 of this part is formed almost uniformly. At a part 11 of the uniform outer diameter, the annular first engaging groove 12 is formed over the outer peripheral surface in the peripheral direction. The first engaging groove 12 has an axial section of a circular arc shape. The outer diameter D1 of the part 11 of the uniform outer diameter of the intermediate shaft 1 is 34.2mm. A width Wa of the first engaging groove 12 is 2.5mm. A depth D2 of the first engaging groove 12 is 0.9mm. Here, the width Wa of the first engaging groove 12 is a distance from a left edge portion 12a in Fig. 2 of the first engaging groove 12 to a right edge portion 12b.

The detailed constitution of the "A" part in Fig. 1 of the inboard boot 4 will be described with reference to Fig. 2. That is, the detailed constitution of the first cylinder part 41 of the inboard boot 4 will be described. The first cylinder part 41 comprises a circular portion 41a which has a thickness Ta, and a first protrusion 41b which protrudes from an inner peripheral surface of the circular portion 41a. An inner diameter of the circular portion 41a is slightly smaller than the outer diameter D1 of the part 11 of the uniform outer diameter of the intermediate shaft 1. In other words, the first cylinder part 41 of the inboard boot 4 is forcedly fitted to the intermediate shaft 1. The thickness Ta of the circular portion 41a is 1.5mm. The first protrusion 41b protrudes from the peripheral surface in the peripheral direction, and fitted in the first engaging groove 12 in the axial direction. The inner peripheral surface of the axial section of the first protrusion 41b has a circular arc shape. A protruding height Tb of the first protrusion 41b is 0.5mm. That is, the protruding height Tb of the first protrusion 41b is smaller than the depth D2 of the first engaging groove 12 of the intermediate shaft 1. Further, an axial width of the first protrusion 41b is almost equal to the width Wa of the first engaging groove 12 of the intermediate shaft 1. Therefore, the inner peripheral surface of the circular portion 41a of the first cylinder part 41, where the first protrusion 41b is not formed, contacts the outer peripheral surface of the part 11 of the uniform outer diameter of the intermediate shaft 1.

The small-diameter inboard clamp member 6 is formed in an annular shape and made from metal material, and pressurizes the outer peripheral surface of the first cylinder part 41 of the inboard boot 4 toward the intermediate shaft 1. An axial width Wb of the small-diameter inboard clamp member 6 is 10.0mm. A crimping allowance of the first cylinder part 41 of the inboard boot 4 by the small-diameter inboard clamp member 6 is 0.2mm. The crimping allowance is a difference between the thickness of the first cylinder part 41 before clamping the first cylinder part 41 by the small-diameter inboard clamp member 6 and the thickness of the first cylinder part 41 after clamping the first cylinder part 41 by the small-diameter inboard clamp member 6. That is, as the crimping allowance is larger, a clamping force (a tightening force) becomes larger.

The axial position of the small-diameter inboard clamp member 6 is determined with respect to the intermediate shaft 1 and the inboard boot 4. A distance L from an end of the small-diameter inboard clamp member 6, near the bellows part 43 of the inboard boot 4, to the edge portion 12a of the first engaging groove 12 of the intermediate shaft 1, near the bellows part 43, is in the range of 4.25mm to 10.0mm. Here, the end of the small-diameter inboard clamp member 6, near the bellows part 43 of the inboard boot 4, means the left end of the small-diameter inboard clamp member 6 in Fig. 2. Also, the edge portion 12a of the first engaging groove 12, near the bellows part 43, means the left edge portion of the first engaging groove 12 in Fig. 2.

The edge portion 12b of the first engaging groove 12, opposite to the bellows part 43, is disposed at a position closer to the bellows part 43 than an end of the small-diameter inboard clamp member 6, opposite to the bellows part 43. That is, the first engaging groove 12 is positioned within the range of the axial width of the small-diameter inboard clamp member 6. Here, the edge portion 12b of the first engaging groove 12, opposite to the bellows part 43, means the right edge portion of the first engaging groove 12 in Fig. 2. Also, the end of the small-diameter inboard clamp member 6, opposite to the bellows part 43, means the right end of the small-diameter inboard clamp member 6 in Fig. 2.

The first engaging groove 12 is disposed at a position farther from the bellows part 43 than the center of the axial width of the small-diameter inboard clamp member 6. When the bellows part 43 is not bent and when the bellows part 43 is bent, the change of the surface pressure exerted on the intermediate shaft 1 by the first cylinder part 41 at the edge portion 12a of the first engaging groove 12, near the bellows part 43, can be reduced. Therefore, even when the bellows part 43 is bent, the reduction of the surface pressure at the edge portion 12a can be restrained. And, although the state of the bellows part 43 is changed, the surface pressure at the edge portion 12a can be increased. The sealing performance between the intermediate shaft 1 and the first cylinder part 41 is achieved by the surface pressure at the both edge portions 12a and 12b of the first engaging groove 12 of the intermediate shaft 1. Thus, the stable sealing performance can be achieved. Further, the first engaging groove 12 is positioned within the range of the axial width of the small-diameter inboard clamp member 6. Accordingly, the sealing performance at the edge portion 12b of the first engaging groove 12, opposite to the bellows part 43, can be securely achieved.

(3) Analysis of Surface Pressure Change Ratio of Sealing Part According to Change of Distance L
It has been described in the above that by the distance L being in the range of 4.25mm to 10.0mm, when the bellows part 43 is not bent and when the bellows part 43 is bent, the change of the surface pressure exerted on the intermediate shaft 1 by the first cylinder part 41 at the edge portion 12a of the first engaging groove 12, near the bellows part 43, can be reduced. In order to make it clear, an analysis of a surface pressure change ratio of the sealing part according to change of the distance L will be described.

The analysis is performed, in the constitution of the "A" part in Fig. 1, by measuring the change ratio of the surface pressure exerted on the intermediate shaft 1 by the first cylinder part 41 as the distance L is changed. Here, the surface pressure change ratio means a value of dividing a difference between the surface pressure, when the bellows part 43 is not bent, and the surface pressure, when the bellows part 43 is bent, by the surface pressure, when the bellows part 43 is not bent. As the surface pressure change ratio is lower, the difference between the surface pressure when the bellows part 43 is not bent and the surface pressure when the bellows part 43 is bent becomes smaller.

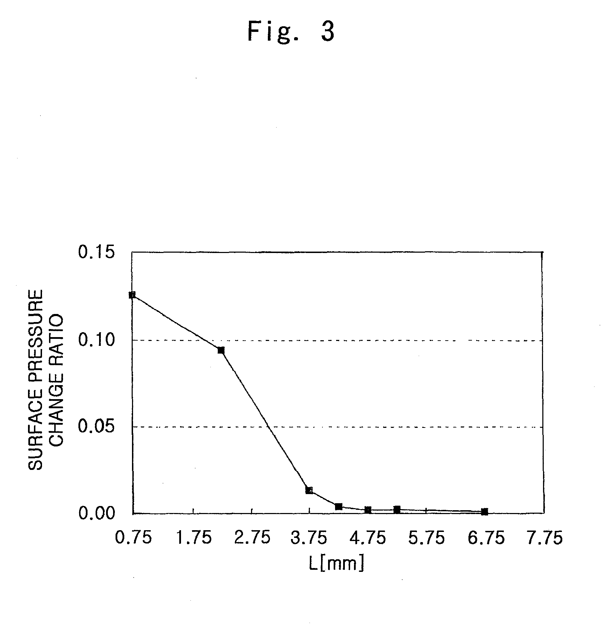

The analysis result is shown in Fig. 3. As shown in Fig. 3, when the distance L is 0.75mm, the surface pressure change ratio is about 0.125. When the distance L is 2.25mm, the surface pressure change ratio is about 0.09. When the distance L is 3.75mm, the surface pressure change ratio is about 0.013. When the distance L is 4.25mm, the surface pressure change ratio is about 0.004. When the distance L is 4.75mm, the surface pressure change ratio is about 0.002. When the distance L is 5.25mm, the surface pressure change ratio is about 0.002. When the distance L is 6.75mm, the surface pressure change ratio is about 0.001 and less.

Like this, as the distance L is larger, the surface pressure change ratio becomes lower. Especially, it can be seen that when the distance L is 4.25mm or more, the surface pressure change ratio becomes very low, i.e., less than 0.01.

(4) Others
In the above description, the sealing part of the first cylinder part 41 and the intermediate shaft 1 has been explained in detail. This relationship can be identically applied to the sealing part of the second cylinder part 42 of the inboard boot 4 and the boot fixing member 22c, the sealing part of the first cylinder part 51 of the outboard boot 5 and the intermediate shaft 1, and the sealing part of the second cylinder part 52 of the outboard boot 5 and the boot fixing member 32c. Accordingly, the above sealing parts can have the same effect as the aforesaid effect.

The numerical values of illustrating the shapes of the respective components described in the above embodiment may be variously changed within the scope of the present invention.
A power transmission device is provided to improve sealing performance by reducing change in a surface pressure of sealing parts between power transmission shafts and boots. A first cylinder part of a boot is made from thermoplastic elastomer. A thickness Ta of the first cylinder part ranges from 1mm to 2mm, and a crimping allowance of the first cylinder part by a clamp member ranges from 0.1mm to 0.5mm. A width Wa of a first engaging groove formed at a power transmission shaft is equal to or greater than 20 percents of an axial width Wb of the clamp member. An axial distance from an end of the clamp member, near a bellows part, to an edge portion of the first engaging groove, near the bellows part, is in the range between 42.5 percents to 100 percents of the axial width Wb of the clamp member.

## Claims

1. A power transmission device comprising:
a first power transmission shaft formed with a first engaging groove around an outer peripheral surface in a peripheral direction;
a second power transmission shaft swingably connected to the first power transmission shaft;
a boot which comprising a first cylinder part, a second cylinder part and a bellows part integrally connecting the first cylinder part and the second cylinder part, the first cylinder part disposed at an outer periphery of the first power transmission shaft and having a first protrusion which is formed around an inner peripheral surface in a peripheral direction and engaged to the first engaging groove in an axial direction, and the second cylinder part disposed at an outer periphery of the second power transmission shaft; and
a first clamp member for clamping an outer peripheral surface of the first cylinder part and pressurizes the first cylinder part toward the first power transmission shaft,
wherein the first cylinder part is made from thermoplastic elastomer,
a thickness of the first cylinder part is in the range of 1mm to 2mm,
a crimping allowance of the first cylinder part by the first clamp member is in the range of 0.1mm to 0.5mm,
a width of the first engaging groove equal to or greater than 20 percents of an axial width of the first clamp member, and
an axial distance defined from an end of the first clamp member, near a bellows part, to an edge portion of the first engaging groove, near the bellows part, and ranging between 42.5 percents and 100 percents of the axial width of the first clamp member.

2. The power transmission device according to claim 1,
wherein an edge portion of the first engaging groove, opposite to the bellows part, is disposed at a position closer to the bellows part than an end of the first clamp member, opposite to the bellows part.

3. The power transmission device according to claim 1,
wherein a protruding height of the first protrusion is smaller than a depth of the first engaging groove.

4. The power transmission device according to claims 1,
wherein the second power transmission shaft is formed with a second engaging groove around an outer peripheral surface in a peripheral direction,
the second cylinder part has a second protrusion which is formed around an inner peripheral surface in a peripheral direction and engaged to the second engaging groove in an axial direction, and
the power transmission device further comprises a second clamp member which clamps an outer peripheral surface of the second cylinder part and pressurizes the second cylinder part toward the second power transmission shaft,
wherein the second cylinder part is made from thermoplastic elastomer,
a thickness of the second cylinder part is in the range of 1mm to 2mm,
a crimping allowance of the second cylinder part by the second clamp member is in the range of 0.1mm to 0.5mm,
a width of the second engaging groove equal to or greater than 20 percents of an axial width of the second clamp member, and
an axial distance defined from an end of the second clamp member, near the bellows part, to an edge portion of the second engaging groove, near the bellows part, and ranging between 42.5 percents and 100 percents of the axial width of the second clamp member.

5. The power transmission device according to claim 4,
wherein an edge portion of the second engaging groove, opposite to the bellows part, is disposed at a position closer to the bellows part than an end of the second clamp member, opposite to the bellows part.

6. The power transmission device according to claim 4,
wherein a protruding height of the second protrusion is smaller than a depth of the second engaging groove.
